**Europäisches Patentamt**

**European Patent Office**

**Office européen des brevets**

(19)

(11) Publication number : **0 321 527 B1**

# (12) EUROPEAN PATENT SPECIFICATION

(45) Date of publication of patent specification :
**12.08.92 Bulletin 92/33**

(51) Int. Cl.⁵ : **B01J 2/20**

(21) Application number : **88905588.5**

(22) Date of filing : **23.06.88**

(86) International application number :
**PCT/AU88/00201**

(87) International publication number :
**WO 89/00079 12.01.89 Gazette 89/02**

(54) **WATER DISPERSIBLE GRANULES.**

(30) Priority : **01.07.87 NZ 220920**

(43) Date of publication of application :
**28.06.89 Bulletin 89/26**

(45) Publication of the grant of the patent :
**12.08.92 Bulletin 92/33**

(84) Designated Contracting States :
**AT BE CH DE FR GB IT LI LU NL SE**

(56) References cited :
**DE-A- 663 410**
**DE-A- 2 162 353**
**FR-A- 1 356 105**

(73) Proprietor : **ICI AUSTRALIA OPERATIONS
PROPRIETARY LIMITED
1 Nicholson Street
Melbourne Victoria 3001 (AU)**

(72) Inventor : **LLOYD, John, Malcolm
24 Surrey Road
Richmond (NZ)**
Inventor : **STUART, Audrey, Grace
23 Waimea Road
Nelson (NZ)**

(74) Representative : **Andrae, Steffen, Dr. et al
Balanstrasse 55
W-8000 München 90 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to formulations of agricultural chemicals, and more particularly to methods of preparing water dispersable granules containing such substances.

Agricultural chemicals are formulated in a number of ways, e.g. as large granules (prills) for direct application to soil, pasture or crops, emulsifiable concentrates, liquid flowable concentrates and wettable powders which are normally diluted with water for application. Liquid flowables and wettable powders comprise the majority of the agricultural chemical formulations sold throughout the world. The former are aqueous suspension and while generally giving satisfactory performance, can settle out of suspension during storage requiring vigorous mixing to re-suspend. Because of the high water content (generally around 50%), packaging and freight costs are increased.

Wettable powders are generally produced by first blending the technical grade chemical (which may already be in a finely divided state, e.g. in an air-milled form), with surfactants (wetting and dispersing agents), fillers and possibly other ingredients. The mixture is then passed through an air-mill or other suitable milling device to reduce the size of the additives (and technical chemical if not previously milled) as well as produce an intimate mixture of the components.

The resultant wettable powder is generally very bulky and becomes air borne readily. This can be hazardous to the user in the case of irritant or toxic materials.

The user of a wettable powder is generally required to observe the following procedures:

Carefully weight the powder from a bulk container (often a dusty messy operation); disperse the powder in sufficient water to make a pourable concentrated suspension; transfer the concentrated suspension to water in an agitated spray tank, and then rising the suspension container thoroughly and finally clean up and decontaminate the scoops and balance pan, etc.

A relatively new concept is water dispersible granules (also known as dry flowables). These are granular formulations of agricultural chemicals that (when properly formulated), disperse readily in water and remain in suspension, i.e. perform as well as liquid flowables and wettable powders when prepared for spray application to soil or plants. This concept is being developed rapidly by agricultural chemical formulators especially in the U.S.A. and Europe. It is applicable generally to solid chemicals of low solubility as distinct from liquid or readily soluble chemicals. However, this invention also relates to dry flowable formulations of the latter type.

The usual method of producing "dry flowables" is to convert the technical chemical to a wettable powder type formulation in the first instance.

This involves blending and milling the ingredients of the formulation irrespective of whether the technical chemical has been previously milled, e.g. by air-milling. The resultant powder is then converted to a granule by agglomeration using a pan-granulator or similar device using water or water containing an adhesive. This is a rather crude process and control of granule size is difficult to achieve. However, it seems to be the method most widely used at present.

DE-A-2162353 discloses a process for the manufacture of enzymatic compositions in spherical form which are to be used in detergent compositions and which have an increased stability upon storage and on exposure to oxidizing agents. The process comprises mixing the normally solid, but water-soluble or at least readily water-dispersible enzyme with a normally solid surfactant to form a homogeneous mixture thereof, making the mixture plastic, extruding the worked mixture through small openings and rolling a bed of the extrusions in frictional contact with surfaces to rub off portions thereof until rounded particles of spherical shape are obtained.

It is the object of said prior art process to avoid high temperatures or the contact of the enzymes with an alkaline or oxidizing aqueous medium, which have adverse effects on enzymatic activity. Since enzymes are inherently water-dispersible, preparing water suspensible granules of otherwise insoluble or non-wettable solids is not an object of the prior art process.

Making agricultural chemicals water-dispersible is, however, the main object of the production of "dry flowables".

It is the object of the present invention to provide a process for the preparation of water dispersible granules containing a usually solid, water-insoluble agricultural chemical as active ingredient ("dry flowables"), which process leads to granules of a more uniform size and of a better water suspensibility than can be achieved by the conventional pan granulation process.

This object is achieved by a process for the preparation of water dispersible granules containing an agricultural chemical as active ingredient, said active ingredient being selected from herbicides and/or fungicides and/or insecticides, comprising mixing the desired ingredients comprising an active ingredient component of at least one agricultural chemical and a surfactant component in the presence of water to form an extrudable wet mix, extruding the wet mix and then rolling the wet extrusions in a rotating bowl type apparatus for a period of at least 30 s with the drum rotating at a speed in the range of from 1 to 100 rpm to break down said extrusions to form granules, and optionally drying the granules.

In accordance with the invention it has surprisingly been found that extrusions which will have a diameter dependent upon the orifice in the extruder, but varying considerably in length, when rolled in a suitable rolling apparatus, break down into discrete sections which surprisingly are of a substantially uniform length.

The ingredients of the granule are first formed into extrudable form. The ingredients will generally comprise one or more active agricultural chemical components which may be liquid or solid at ambient temperature and either of an insoluble or water soluble type.

Typically the active chemical component comprises from 1 to 99% and preferably from 20 to 95% by weight of the dry weight of the composition.

The process of the invention may be performed using a wide range of agricultural chemicals as active ingredients selected from herbicides, fungicides and insecticides.

Examples of herbicidal active ingredients may be selected from one or more of: benzo-2,1,3-thiadiazine-4-one-2,2-dioxides and such as bentazon; hormone herbicides such as MCPA, dichlorprop, MCPB and mecoprop; 3-[4-(4-halophenoxy)phenyl]-1,1-dialkylureas such as chloroxuron; dinitrophenols and their derivatives, for example, DNOC, dinotreb and dinoseb; dinitroaniline herbicides such as dinitramine, nitralin and trifluralin; phenylurea herbicides such diuron and fluometuron; phenylcarbamoylphenylcarbamates such phenmedipham and desmedipham; 2-phenylpyridazin-3-ones such as as pyrazon; uracil herbicides such as lenacil, bromacil and terbacil; triazene herbicides such as atrazine, simazine and aziproptryne; 1-alkoxy-2-alkyl-3-phenylurea herbicides such as linuron, monolinuron and chlorobromuron; pyridine herbicides such as clopyralid and picloram; 1,2,4-triazin-5-one herbicides such as metamitron and metribuzin; benzoic acid herbicides such as 2,3,6-TBA, dicamba and chloramben; anilide herbicides such as balachlor, alachlor, propachlor and propanil; dihalobenzonitrile herbicides such as dichlobenil, bromoxynil and ioxynil; haloalkanoic herbicides such as dalapon and TCA; diphenylether herbicides such as fluorodifen and bifenox; N-(heteroarylaminocarbonyl)-benzenesulphonamides such as DPX 4189; Aryloxyphenoxypropionate herbicides such as fluazifop and diclofop; cyclohexane-1-3-dione derivatives such as alkoxydim-sodium and tralkoxydim; bipryidylium herbicides such as paraquat and diquat; organoarsenical herbicides such as MSMA; amino acid herbicides such as glyphosate; and other herbicides such as dipenamid and naptalam.

Preferred herbicides include diuron, atrazine, simazine, cyanazine, oryzalin, fluometuron, methazole, metoxuron and hexazinone.

Examples of fungicides include imazalil, benomyl, carbendazim (BCM), thiophanate-methyl, captafol, folpet, captan, sulphur, carbamates, dithiocarbamates, phenyl-tin compounds, carbathiins, dicarboximides (including iprodione, vinclozolin, procymidone), copper oxychloride, triforine, dodemorph, tridemorph, dithianon, pyrazophos, binapacryl, quinomethionate, panoctine, furalaxyl, aluminium tris(ethylphosphonate), cymoxanil, ethirimol, dimethirimol, fenarimol, fenpropidin, fenpropimorph, propiconazole, bupirimate, metalaxyl, ofurace, benalaxyl, oxadixyl, chlorothalonil, metaxanine, triazole derivatives such as triadimefon, triadimenol, diclobutrazol, flutriafol and penconazole and ergosterol-synthesis inhibitig fungicides.

Preferred fungicides for use as an active ingredient may include captan, thiram, mancozeb, dichlofluanid and metiram.

Examples of insecticides which may be used as an active ingredient may include pyrethroids such as cypermethrin organophosphorus insecticides, pirimor croneton, dimethoate, metasystox and formethion.

In addition to the active ingredient component the ingredients include a surfactant component and optionally other components such as a filler component to provide the desired active ingredient content and/or a binding agent.

The term surfactant is used in the broad sense to include materials which may be referred to as emulsifying agents, dispersing agents and wetting agents and the surfactant component may comprise one or more surfactants selected from the anionic, cationic and nonionic type.

Examples of surfactants of the anionic type include soaps, salts of aliphatic monoesters of sulphuric acid such as sodium lauryl sulphate, salts of sulphonated aromatic compounds, for example sodium dodecylbenzenesulphonate, sodium, calcium or ammonium lignosulphonate or butylnaphthalene sulphonate, and a mixture of the sodium salts of diisopropyl- and triiso-propylnapthalene sulphonates. Suitable agents of the non-ionic type include, for example, the condensation products of ethylene oxide with fatty alcohols such as oleyl alcohol or cetyl alcohol, or with alkyl phenols such as octyl phenol, nonyl phenol and octyl cresol. Other non-ionic agents are the partial esters with ethylene oxide and the lecithins and phosphoxylated surfactants such as phosphorylated ethylene oxide/propylene oxide block copolymer and ethyoxylated and phorphorylated stryryl substituted phenol.

Preferably the surfactant component will comprise at least one wetting agent such as those selected from alkyl naphthalene sulfonates, phosphate esters, sulphosuccinates and nonionics such as tridecyl alcohol ethoxylate; and/or at least one dispersing agent such as those selected from the group of napthalene conden-

EP 0 321 527 B1

sates, lignosulfonates, polyacrylates and phosphate esters.

Typically the total surfactant component will comprise from 0.1 to 25% and preferably from 1 to 15% by weight of the dry weight of the composition.

A variety of fillers may be used in water dispersible granule compositions. Examples of fillers include: minera earths and clays such as, for example, kaolin, bentonite, kieselguhr, Fuller's earth, Attaclay, diatomaceous earth, bole, loess, talc, chalk, dolomite, limestone, lime, calcium carbonate, powdered magnesia, magnesium oxide, magnesium sulfate, sodium chloride, gypsum, calcium sulfate, pyrophyllite, silicic acid, silicates and silica gels; fertilizers such as, for example, ammonium sulfate, ammonium phosphate, ammonium nitrate and urea; natural products of vegetable origin such as, for example, grain meals and flours, bark meals, wood meals, nutshell meals and cellulosic powders; and synthetic polymeric materials such as, for example, ground or powdered plastics and resins.

Where used the filler component typically comprises from 1 to 99% and preferably from 5 to 80% by weight of the total granule composition. Optionally, a binding agent may also be incorporated in the granule composition. Suitable binding agents may include, for example, synthetic and natural gums, synthetic polymers such as poly vinyl acetate and cellulose derivatives such as methyl cellulose.

We have found that the rate of dispersion of water dispersible granule products is improved by wet-mixing the ingredients and preferably the mixing step is carried out to form an extrudable wet mix which has dough-like consistency, that is a consistency analogous to a stiff dough produced in the bread making process. Such a dough like consistency may be provided by thorough mixing or kneading using a mixing apparatus such as pug mill, double shafted auger or an extrusion apparatus may be adapted to provide suitable mixing.

The water is present in the wet mixing step of the process in a controlled amount such that there is sufficient water to mobilise the surfactant component and enable the mixture to be formed into granules by extrusion but insufficient to cause the granules to stick together and agglomerate once formed. Although the quantity of water used in a given formulation will vary it will generally be in the range of from 5 to 50 litres (preferably from 10 to 30 litres) of water per 100 kg of dry mix.

The order of addition and mixing of the granule ingredients is not narrowly critical. In one embodiment, for example, the dry ingredients are blended and the composition is then mixed while water is added. The water may, for example be added as a fine spray and in one embodiment one of more surfactants are added as an aqueous solution to a dry mix of the other components. The use of the above described wet mixing process further has the advantage of allowing the use of solid technical grade surfactants without the need to finely grind such surfactants as is generally necessary in prior art processes.

Materials used in the process of the invention may be in a finely divided form, preferably in an air-milled form which is generally the form of technical grade chemicals supplied by manufacturers.

After thorough mixing or after otherwise putting the mix into a form suitable for extrusion, extrusion takes place through suitable orifices. The size of the granules will depend upon the size of the orifices and the extruder may thus be fitted with a mesh or die selected to provide a desired size of granule. Preferably extrusion orifices will be chosen to provide extrusions between 300 and 1000 μm in diameter. The extrusions can vary considerably in length, e.g. up to 8 cm or more long.

After extruding the wet mix the wet extrusions are broken down by rolling in a tumbling action. In this specification the term rolling is used to means causing the extrusions to roll or tumble against each other or a fixed or moving surface. The rolling motion causes the extrusions to break down into discrete sections of a length generally not exceeding three times their diameter. The rolling process also rounds off the granules to some extent. The rolling process is carried out on a commercial scale in a rotating bowl apparatus, which causes the extrusions to break down into discrete sections which in turn are rounded to some extent by the rolling process.

Product recoveries where in excess of 95% by weight of product comprises particles within the preferred size range can generally be achieved using the process of the present invention without size screening. This is considerably greater than can be obtained when using a pan granulation method.

Preferably at least 95% by weight of the composition will comprise granules of size such that they pass through a 1700 μm sieve but are retained on a 300 μm sieve. In many cases it is possible to achieve over 99% of particles in this size range.

The rolling process may be done as a batch step or as part of continuous process in which extrusions are constantly fed from the extruder into the rolling apparatus and granular product is constantly delivered from the rolling apparatus.

It will be evident to those skilled in the art that one significant advantage of the process of the present invention is that the extrusions are not reduced (e.g. by cutting) to granules as they exit the extruder. This means that the rate of extrusion is not limited by the rate at which the extrusions can be broken down into granules and high extrusion rates can be used. This results in the process of the present invention being significantly more cost-effective than prior art extrusion processes for producing water dispersible granules.

4

The rate of processing of the extrusions will of course depend on many factors such as the consistency of extrusions, size of the rolling apparatus, rate of rotation and loading of the rolling apparatus. However, without undue experimentation a suitable product may be produced by rolling extrusions for periods in the range of from at least 30 seconds to 1 hour in the rolling apparatus although longer or shorter times may be used if desired. We have found it convenient to roll the extrusions for periods in the range of from 1 to 5 minutes.

The rate of rotation of the rolling apparatus is not narrowly critical. Rotation rates are from 1 to 100 rpm and preferably from 10 to 40 rpm.

The rolled granules are preferably dried. With some formulations the granules may be dried by allowing them to stand, however rapid or forced drying is generally preferred. Drying can, for example, be carried out by heating the granules on trays or in a fluidised bed dryer. The drying process will preferably remove as much water as possible in order to reduce weight and to provide good stability to the granules while still in a dry flowable state. Most preferably the granule will be dried to less than 0.5% as weight loss on complete drying.

The process of the invention considerably reduces the amount of oversized and undersized material which must be recycled. Fine particles and fragments which may be produced on extrusion are generally incorporated into the granules during tumbling. Consequently the granules composition is essentially dust free.

As granules may be prepared having uniform dimensions and density quantities for end use can be conveniently and accurately measured by volume. We have found that the granule composition produced by the above process have a lower tendency to powder and form dust than granules prepared by conventional processes such as pan-granulation while also having dispersibility properties which are typically superior.

The invention is now illustrated by but in no way limited to the following examples.

Example 1

The following dry ingredients are weighed into a ribbon or other suitable blender fitted with a close fitting lid, and are blended for 30 seconds:
99.5% AI technical grade simazine in air milled form as supplied - 90.453 kg.
Fine Kaolin 'Koclay GM40' (filler) - 1.547 kg.

The following surfactant solution is then applied via a pressure vessel through spray nozzles mounted within the blender:
Morwet 'D-425' (dispersing agent) naphthalene formaldehyde condensate, sodium salt 6 kg; and Morwet 'EFW', (wetting agent) sulfated alkyl carboxylate and alkyl naphthalene sulfonate, sodium salt 1.5 kg, dissolved in 15 kg of water.

The wet mixture is blended for 2 minutes after this solution has been applied and is then transferred to a storage hopper fitted with a variable speed auger discharge.

The blended mixture is then extruded (manesty rotorgran) through a 30 x 31 g, 530 μm aperature mesh at a rate close to maximum machine load. This results in further intimate mixing of ingredients, formation of a dough and extrusion of same through the mesh.

The extrusions so formed are rolled in an open-mouth bowl for approx. 3 minutes during which time they break down into discrete granules and develop a reasonably smooth appearance. Granules are dried to a residual moisture content of 0.5% as loss on complete drying.

The dried product is screened and the very small amount of mainly undersized product so removed is returned to the primary blender for re-processing with a subsequent batch.

Example 2

A commercially available water-dispersible granule formulation was obtained and found to have the following physical properties.
Sieve analysis:-
Retained on 300 μm     10.1%
Retained on 150 μm     70.76%
Retained on 106 μm     87.17%
The moisture content of the granules was 1.7%.
The granules were broken down and treated as follows:
The material from the commercially available granules was weighed and blended for 2 minutes with about 32% water (dry weight basis). The blended mixture was extruded (manesty rotogram) through a 744 μm screen of 94% open area (34 mesh, 30 gauge) and the extrusions rolled in an open-mouth bowl for approximately 3 minutes. The granules so produced were dried to a residual moisture content of about 0.5% as loss on complete drying. The suspensibility of the original commercial product was compared with the product reconstituted in accordance with the invention as described above.

| | Trial 1 | Trial 2 |
|---|---|---|
| Commercial product | 72.35% | 71.64% |
| Reconstituted product | 97.61% | 99.03% |

The dispersion time of the formulations was found to be as follows:-

Commercial product     >1 minute

Reconstituted product     30 seconds

The above clearly demonstrates the advantage of the present invention in providing products of superior suspensibility and more rapid dispersion time when compared with products made by presently used granulation techniques.

Example 3

The process of Example 1 was repeated using the following components expressed as weight percent based on product dried to 0.5% w/w water.

Active Ingredient (AI)     81.05

Surfactant component:

"Marasperse" N-22#     8.0

"Agrilan" DG 113*     2.0

Kaolin clay     8.45

The components were dry-mixed and then blended with water the total amount of water being controlled to provide a dough like consistency in the wet mixture prior to extrusion.

# A sodium lignosulphate dispersant ex Reed Lignin.

* A nonionic wetting agent supplied by Lankro Chemicals Limited.

Example 4

Compositions were prepared according to the procedure of Example 3 using the following active ingredient component with components used in the stated percent by weight of dry ingredients.

Active Ingredient Component

| | | | |
|---|---|---|---|
| (a) | Cypermethrin | | 20-30% |
| (b) | Diuron | | 90% |
| (c) | Simazine | | 90% |
| (d) | Atrazine | | 90% |
| (e) | Cyanazine | | 90% |
| (f) | Dalapon-Na | | 80% |
| (g) | Simazine | | 15.3% |
| | Amitrole | | 5.3% |
| | and Dalapon-Na | | 20.8% |
| (h) | Fluometuron | | 80% |
| (i) | Methazole | | 80% |
| (j) | Metoxuron | | 80% |
| (k) | Norflurazon | | 80% |
| (l) | Oryzalin | | 85% |
| (m) | Hexazinone | | 85% |
| (n) | Hexazinone and | | 15% |
| | Diuron | | 50% |
| (o) | Metribuzen | | 75% |
| (p) | Thiram | | 80% |
| (q) | Azinphos-methyl | | 35%-50% |
| (r) | Metiram and | | 60% |
| | Nitrothal-isopropyl | | 12.5% |
| (s) | Propargite | | 30% |

## Claims

1. A process for the preparation of water dispersible granules containing an agricultural chemical as active ingredient, said active ingredient being selected from herbicides and/or fungicides and/or insecticides, comprising mixing the desired ingredients comprising an active ingredient component of at least one agricultural chemical and a surfactant component in the presence of water to form an extrudable wet mix, extruding the wet mix and then rolling the wet extrusions in a rotating bowl type apparatus for a period of at least 30 s with the drum rotating at a speed in the range of from 1 to 100 rpm to break down said extrusions to form granules, and optionally drying the granules.

2. A process according to claim 1 wherein the active ingredient component comprises from 1 to 99% by weight of the dry weight of the composition, and the surfactant component comprises from 0.1 to 20% by weight of the dry weight of the composition.

3. A process according to claim 1 or 2 wherein the ingredients comprise a filler present in an amount of from 1 to 99% by weight of the total composition.

4. A process according to any of claims 1 to 3 wherein the ingredients are wet-mixed to form an extrudable wet mix of dough-like consistency.

5. A process according to any of claims 1 to 4 wherein the water is present in the wet mix in sufficient quantity to mobilize the surfactant component and enable granule formation by extrusion but insufficient to cause the granules to agglomerate once formed.

7

6. A process according to any of claims 1 to 5 wherein water is present in the wet mixing stage of the process in a ratio of from 10 to 30 litres per 100 kg of dry mix.

7. A process according to any of claims 1 to 6 wherein the extruding step comprises extruding the wet mix through orifices to provide extrusions of a diameter in the range of between 300 and 1000 $\mu$m.

8. A process according to any of claims 1 to 7 wherein the extrusions are rolled to break down the extrusions to a length no more than three times the diameter.

9. A process according to any of claims 1 to 8 wherein at least 95% by weight of the granule composition comprises granules of a size which pass through a 1700 $\mu$m sieve but are retained on a 300 $\mu$m sieve.

10. A process for the preparation of an aqueous agrochemical formulation comprising dispersing the granules prepared in accordance with the process of any one of claims 1 to 9 in water to provide a suspension of the active ingredient.

## Patentansprüche

1. Verfahren zur Herstellung von wasserdispergierbaren Granalien, die als Wirkstoff eine landwirtschaftliche Chemikalie enthalten, wobei der genannte Wirkstoff ausgewählt ist aus Herbiziden und/oder Fungiziden und/oder Insektiziden, bei dem man die gewünschten Bestandteile, die einen Wirkstoff aus wenigstens einer landwirtschaftlichen Chemikalie und eine Tensidkomponente umfassen, in Gegenwart von Wasser mischt, um eine extrudierbare Naßmischung zu bilden, die Naßmischung extrudiert und die nassen Extrudate in einer Vorrichtung vom Drehschüsseltyp für einen Zeitraum von wenigstens 30 s rollt, wobei die Trommel mit einer Geschwindigkeit im Bereich von 1 bis 100 U/min rotiert, um die Extrudate unter Bildung von Granalien zu brechen, sowie gegebenenfalls die Granalien trocknet.

2. Verfahren nach Anspruch 1, bei dem die Wirkstoffkomponente von 1 bis 99 Gew.-% des Trockengewichts der Zusammensetzung bildet und die Tensidkomponente von 0.1 bis 20 Gew.-% des Trockengewichts der Zusammensetzung bildet.

3. Verfahren nach Anspruch 1 oder 2, bei dem die Bestandteile einen Füllstoff umfassen, der in einer Menge von 1 bis 99 Gew.-% der Gesamtzusammensetzung vorhanden ist.

4. Verfahren nach irgendeinem der Ansprüche 1 bis 3, bei dem die Bestandteile so naßgemischt werden, daß eine extrudierbare Naßmischung von teigähnlicher Konsistenz gebildet wird.

5. Verfahren nach irgendeinem der Ansprüche 1 bis 4, bei dem das Wasser in der Naßmischung in einer Menge vorhanden ist, die ausreicht, die Tensidkomponente zu mobilisieren und eine Granalienbildung durch Extrusion zu ermöglichen, jedoch nicht ausreicht, eine Agglomeration einmal gebildeter Granalien zu bewirken.

6. Verfahren nach irgendeinem der Ansprüche 1 bis 5, bei dem das Wasser in der Naßmischstufe des Verfahrens in einem Verhältnis von 10 bis 30 1 pro 100 kg der Trockenmischung vorhanden ist.

7. Verfahren nach irgendeinem der Ansprüche 1 bis 6, bei dem die Extrudierstufe das Extrudieren der Naßmischung durch solche Öffnungen umfaßt, daß Extrudate mit einem Durchmesser im Bereich zwischen 300 und 1000 $\mu$m erzeugt werden.

8. Verfahren nach irgendeinem der Ansprüche 1 bis 7, bei dem die Extrudate so gerollt werden, daß sie auf eine Länge von nicht mehr als der dreifache Durchmesser gebrochen werden.

9. Verfahren nach irgendeinem der Ansprüche 1 bis 8, bei dem wenigstens 95 Gew.-% der Ganulatzusammensetzung Granalien einer Größe umfassen, die durch ein 1700 $\mu$m - Sieb hindurchgehen, jedoch von einem 300 $\mu$m - Sieb zurückgehalten werden.

10. Verfahren zur Herstellung einer wäßrigen Formulierung von landwirtschaftlichen Chemikalien, daß die Dispergierung der nach dem Verfahren nach irgendeinem der Ansprüche 1 bis 9 hergestellten Granalien in Wasser umfaßt, um eine Suspension des Wirkstoffs zu erzeugen.

## Revendications

1. Procédé de préparation de granules dispersables dans l'eau, contenant comme ingrédient actif un agent chimique pour l'agriculture, ledit ingrédient actif étant choisi entre des herbicide et/ou des fongicides et/ou des insecticides, qui consiste à mélanger les ingrédients désirés comprenant un ingrédient actif composant d'au moins un produit chimique destiné à l'agriculture et un agent surfactif en présence d'eau pour former un mélange humide extrudable, à extruder le mélange humide, puis à rouler les corps extrudés humides dans un appareil du type à bol rotatif pendant une période d'au moins 30 secondes, le tambour tournant à une vitesse comprise dans la plage de 1 à 100 tr/min pour disloquer les corps extrudés de manière à former des granules, et à titre facultatif, à sécher les granules.

2. Procédé suivant la revendication 1, dans lequel l'ingrédient actif constitue 1 à 99% en poids de la composition sur base sèche, et le composant surfactif constitue 0,1 à 20% en poids de la composition sur base sèche.

3. Procédé suivant la revendication 1 ou 2, dans lequel les ingrédients comprennent une charge présente en une quantité de 1 à 99% en poids de la composition totale.

4. Procédé suivant l'une quelconque des revendications 1 à 3, dans lequel les ingrédients sont mélangés à l'état humide pour former un mélange humide extrudable ayant la consistance d'une pâte.

5. Procédé suivant l'une quelconque des revendications 1 à 4, dans lequel l'eau est présente dans le mélange humide en une quantité suffisante pour mobilise le composant surfactif et pour permettre la formation de granules par extrusion mais insuffisante pour que les granules puissent s'agglomérer une fois formés.

6. Procédé suivant l'une quelconque des revendications 1 à 5, dans lequel de l'eau est présente au stade de mélange à l'état humide du procédé dans une proportion de 10 à 30 litres d'eau pour 100 kg de mélange sec.

7. Procédé suivant l'une quelconque des revendications 1 à 6, dans lequel l'étape d'extrusion consiste à extruder le mélange humide à travers des orifices pour produire des corps extrudés dont le diamètre se situe dans la plage de 300 à 1000 μm.

8. Procédé suivant l'une quelconque des revendications 1 à 7, dans lequel les corps extrudés sont roulés en vue de leur fragmentation jusqu'à une longueur ne dépassant pas trois fois le diamètre.

9. Procédé suivant l'une quelconque des revendications 1 à 8, dans lequel au moins 95% en poids de la composition des granules sont constitués de granule de diamètre traversant un tamis de 1700 μm mais retenus sur un tamis de 300 μm.

10. Procédé de préparation d'une formulation aqueuse agrochimique, qui consiste à disperser les granules préparés conformément au procédé suivant l'une quelconque des revendications 1 à 9 dans l'eau pour former une suspension de l'ingrédient actif.